# FASCICULE DE BREVET EUROPEEN

(11) **EP 1 045 230 B1**
(45) Date de publication et mention de la délivrance du brevet: **13.12.2006**
(21) Numéro de dépôt: 00420065.5
(22) Date de dépôt: 05.04.2000
(51) Int. Cl.: G01G 21/23, G01G 19/02

(54) **Procédé d'installation sur un ouvrage d'un pont bascule et dispositif pour la mise en oeuvre de ce procédé**
Einbauverfahren eines Wiegebrückebauwerks und Anordnung zur Verwirklichung dieses Verfahrens
Method of installing a weighbridge construction and device for implementing the method

(30) Priorité: 15.04.1999 FR 9904925
(43) Date de publication de la demande: 18.10.2000
(73) Titulaire: Arpege Master K, 69680 Chassieu (FR)
(72) Inventeur: Evesque, Georges M., 69330 Meyzieu (FR); Sautaz, Jean-Louis M., 07000 Privas (FR)
(74) Mandataire: Maureau, Philippe

(56) Documents cités:
- FR-A- 2 275 759
- FR-A- 2 581 185
- GB-A- 2 125 175

## Description

La présente invention concerne un procédé d'installation d'un pont bascule ainsi qu'un dispositif utilisé pour la mise en oeuvre de ce procédé.

La présente invention concerne notamment des ponts bascules destinés à peser par exemple des camions ou des wagons. Elle peut toutefois également s'appliquer à des ponts bascules de plus petite ou de plus grande taille.

Un pont bascule connu présente par exemple une charpente mécano-soudée raccordée sur des berceaux techniques intégrant des capteurs. On peut également avoir une charpente reposant directement sur des capteurs de pesage. Une telle charpente est par exemple habillée par des plaques de béton et/ou des plaques métalliques.

Un tel pont bascule peut être posé au sol, ou dans une fosse creusée dans le sol, ou être un pont bascule transportable. La présente invention concerne les ponts bascules posés au sol ou dans une fosse.

Un tel pont est alors généralement monté en usine puis démonté pour être mis en place chez le client. La norme prévoit alors un contrôle réalisé en usine et un second contrôle réalisé une fois le pont bascule installé chez le client.

Habituellement, pour le transport du pont bascule entre l'usine et le client, les capteurs sont remplacés par un faux capteur servant alors de cale. Lors du montage chez le client, des platines d'appui sont scellées au sol ou dans la fosse puis les faux capteurs sont remplacés par les capteurs de pesage.

On est alors obligé de réaliser deux contrôles du pont bascule : un dans l'usine et l'autre chez le client. Ces opérations sont coûteuses. En effet, elles nécessitent de grosses masses étalon. Il faut donc des moyens de manutention pour déplacer ces grosses masses et de plus il faut transporter ces masses chez le client.

Le document FR 2 581 185 décrit un pont bascule dont la conception est telle qu'elle permet son transport sur la route, à l'état complet, sans démontage d'organes influant sur la précision du pesage et nécessitant l'intervention d'un spécialiste pour leur remontage correct. Le principal souci est ici de pouvoir transporter le pont bascule sans déborder en largeur du gabarit routier. Ainsi, le châssis supérieur du pont bascule décrit ici comporte des parties rabattables entre une position horizontale d'utilisation et une position verticale d'escamotage.

Le document FR 2 275 759 décrit un pont bascule qui comprend des moyens élastiques de rappel du tablier à sa position centrée exacte et des dispositifs de butée limitant les déformations de ces moyens élastiques de rappel. On retrouve dans ce document un descriptif général d'un pont bascule avec une fosse, une charpente formant tablier et reposant sur des capteurs prenant appui sur des semelles en fond de fosse.

Le document GB 2 125 175 concerne également un pont bascule. Il s'agit là d'un pont bascule modulaire dont la longueur peut être adaptée. Ce pont bascule est destiné à être placé dans un trou peu profond et repose sur des plaques support.

La présente invention a alors pour but de fournir un procédé dans lequel un seul contrôle du pont bascule est suffisant.

A cet effet, le procédé qu'elle propose est un procédé d'installation sur un ouvrage, par exemple en béton, tel une fosse, une dalle ou similaire, d'un pont bascule comportant une structure destinée à être montée sur l'ouvrage, des capteurs munis d'une platine d'appui étant disposés entre la structure et l'ouvrage.

Selon l'invention, le procédé comporte les étapes suivantes :
a)- scellement dans l'ouvrage de dispositifs d'appui comprenant chacun deux surfaces d'appui destinées à recevoir chacune une platine d'appui d'un capteur,
b)- montage des capteurs et des platines d'appui sur la structure, et
c)- fixation de chaque platine d'appui sur la surface d'appui correspondante.

De cette manière, lors de la mise en place du pont bascule sur l'ouvrage, il suffit de le positionner et de fixer chacune des platines d'appui sur la surface d'appui correspondante. Il est alors inutile de démonter les capteurs entre l'atelier de fabrication et l'ouvrage destiné à recevoir le pont bascule.

Pour le transport du pont bascule, le procédé selon l'invention comporte avantageusement aussi l'étape suivante réalisée avant l'étape c) :
- bridage des platines d'appui sur la structure du pont bascule.

Les platines d'appui sont alors solidaires de la structure du pont bascule et les capteurs sont alors protégés durant le transport. D'autres moyens peuvent être bien entendus envisagés pour protéger les capteurs, comme par exemple les placer dans un étui englobant le capteur, la platine et une partie de la structure du pont bascule.

Afin de faciliter la fixation des platines d'appui sur les surfaces d'appui tout en garantissant une bonne liaison entre le pont bascule et l'ouvrage, cette fixation se fait avantageusement par vissage.

La présente invention propose aussi un ouvrage, par exemple en béton, tel une fosse, une dalle ou similaire, destiné à recevoir un pont bascule, caractérisé en ce qu'il comporte au moins un dispositif d'appui scellé dans l'ouvrage et destiné à recevoir au moins deux platines d'appui de capteurs de pont bascule, le dispositif d'appui comportant deux longerons reliés par au moins deux traverses sur chacune desquelles est ménagée une surface d'appui. Les surfaces d'appui pour les platines d'appui des capteurs sont alors par exemple réalisées sur ces traverses.

Chaque dispositif d'appui selon l'invention peut également comporter en outre au moins une traverse secondaire sur laquelle est fixée, de préférence par soudage, une butée de choc s'étendant perpendiculairement aux longerons et aux traverses. On a ainsi une butée de choc solidement ancrée qui ne risque pas de se desceller.

Une variante de réalisation de ce dispositif d'appui prévoit que les longerons sont des profilés métalliques présentant une section transversale en U. Ceci permet un bon ancrage du dispositif dans l'ouvrage en béton.

Bien entendu, le procédé selon l'invention met de préférence en oeuvre un ouvrage tel que décrit plus haut. Ce procédé est alors avantageusement tel que les longerons des dispositifs d'appui sont montés transversalement par rapport à la structure du pont bascule.

De toute façon, l'invention sera bien comprise à l'aide de la description qui suit, en référence au dessin schématique annexé, illustrant le procédé selon l'invention et montrant un chevêtre mis en oeuvre dans ce procédé.
Figure 1 est une vue en perspective montrant partiellement les différentes pièces constitutives d'un pont à bascule et d'une fosse,

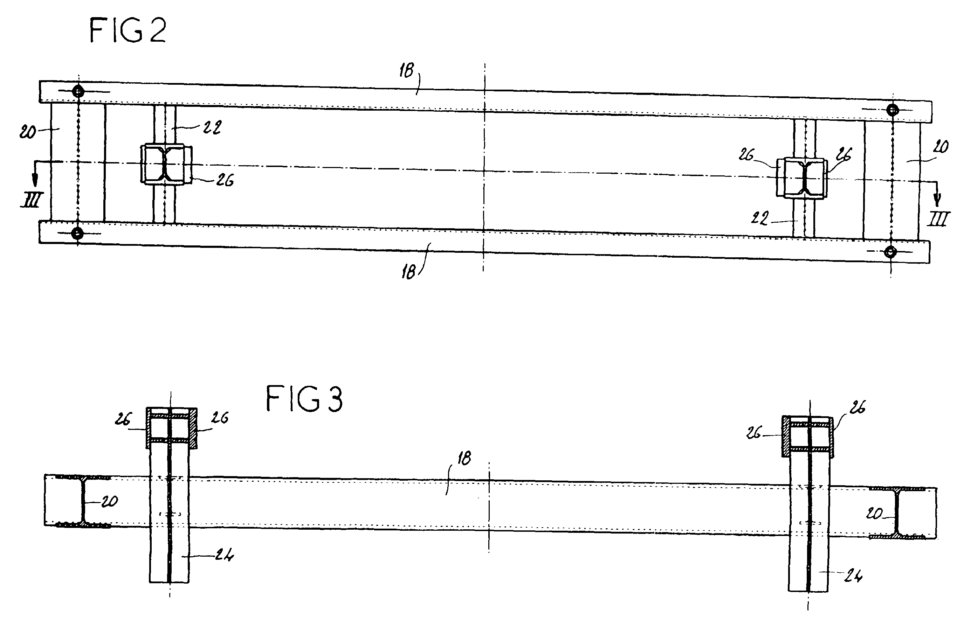

Figure 2 est une vue de dessus à échelle agrandie du chevêtre représenté sur la figure 1,
Figure 3 est une vue en coupe selon la ligne de coupe III-III de la figure 2,
Figure 4 est une vue en coupe longitudinale d'un pont à bascule monté dans une fosse, et
Figure 5 est une vue correspondant à la figure 4 montrant une partie du pont de la figure 4 avant le montage dans la fosse.

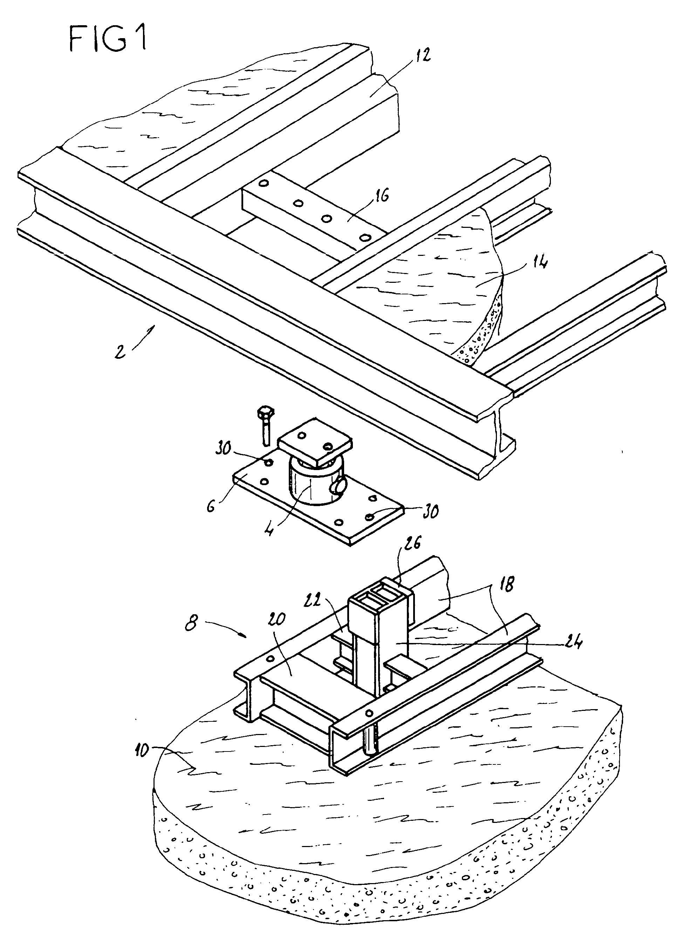

La figure 1 montre en partie une structure 2 d'un pont bascule, un capteur 4 muni d'une platine d'appui 6, un dispositif d'appui appelé chevêtre 8, et une fosse 10.

La structure 2 est une structure classique pour un pont bascule. Elle comporte une charpente 12 mécano-soudée dans laquelle ont été coulées ou posées des plaques de béton 14. Sur cette charpente 12, sont prévues des poutres 16 destinées chacune à recevoir un capteur 4, ainsi que des caissons 28.

La structure 2 n'est pas décrite en détails ici car diverses structures peuvent être utilisées dans le cadre de la présente invention et ces structures sont des structures connues de l'homme du métier.

Le capteur 4 et sa platine d'appui 6 sont également connus de l'homme du métier et ne présentent pas de caractéristique particulière par rapport au capteur et platine d'appui de l'art antérieur.

Le chevêtre 8 comporte deux longerons 18, deux traverses principales 20 et deux traverses secondaires 22.

Les longerons 18 sont des profilés métalliques, en acier par exemple, présentant une section transversale en forme de U. Ils sont disposés parallèlement l'un à l'autre de telle sorte que les bases du U se font face. Ces longerons 18 sont reliés l'un à l'autre à proximité de leurs extrémités à chaque fois par une traverse principale 20. Cette dernière est un profilé en I qui s'étend perpendiculairement aux longerons 18.

A proximité de chaque traverse principale 20 se trouve une traverse secondaire 22. Cette dernière porte un élément profilé 24 de section transversale en I qui s'étend perpendiculairement aux traverses secondaires 22 et aux longerons 18. Chaque élément profilé 24 porte une plaque de butée 26 formant une butée de choc. Les plaques de butée 26 sont destinées à coopérer avec une partie de la charpente 12 du pont bascule et font saillie du cadre formé par les longerons 18 et les traverses principales 20, vers la structure 2. On remarque ici que les éléments profilés 24 font également saillie hors de ce cadre du côté de l'extrémité opposée à celle portant les plaques de butée 26.

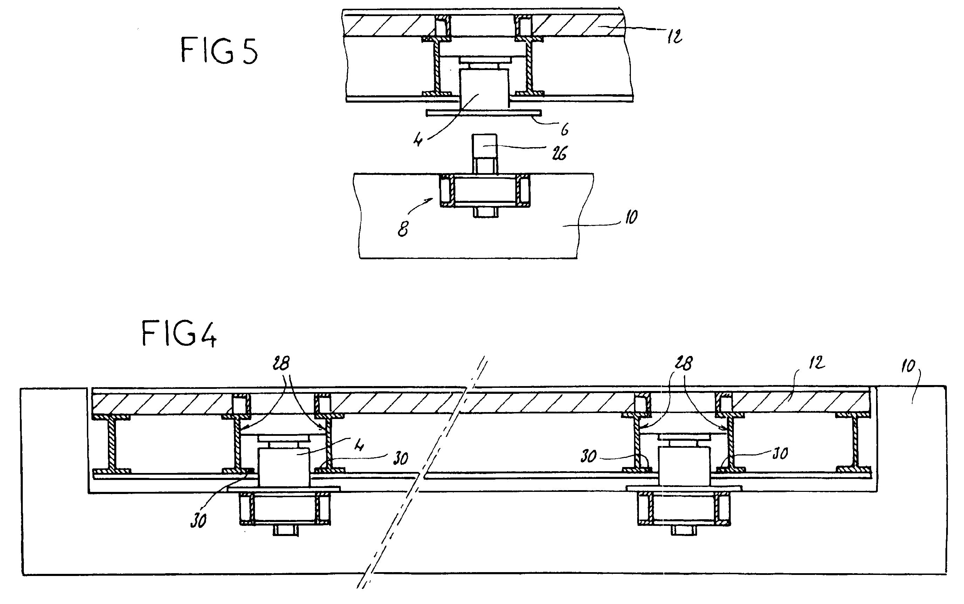

Pour installer le pont bascule, on réalise tout d'abord des massifs et des murs en béton pour former la fosse 10. Les chevêtres 8 sont positionnés sur le radier de propreté avant coulage des massifs. Lors du coulage des massifs, ils sont noyés dans le béton et donc parfaitement ancrés dans la fosse. Les chevêtres 8 servent chacun de dispositif d'appui pour deux capteurs 4 et platines d'appui 6. Ils sont disposés transversalement par rapport à l'axe longitudinal de la structure 2. Comme on peut le voir sur la figure 4, les longerons 18, les traverses principales 20 et secondaires 22 prennent place dans la fosse 10. La profondeur de ce dernier correspond sensiblement à la hauteur des profilés utilisés pour réaliser les longerons 18 et les traverses principales 20. Les traverses secondaires 22 sont de hauteur légèrement moindre. La partie des éléments profilés 24 portant les plaques de butée 26 font saillie hors des massifs tandis que l'extrémité opposée de ces éléments profilés 24 est scellée dans la dalle de béton formant la fosse 10. On a ainsi un excellent ancrage du chevêtre dans la fosse 10. Un scellement est également réalisé au niveau des longerons 18.

Dans l'atelier de fabrication de la structure 2, les capteurs 4 et les platines d'appui 6 ont été montés sur les caissons 28. Pour le transport du pont bascule de l'atelier vers la fosse 10, la platine 6 est bridée sur le caisson 28. Des trous 30 sont prévus à cet effet dans le caisson 28 et sur la platine 6. Les trous 30 de la platine 6 sont par exemple taraudés et ceux du caisson 28 lisses.

Pour l'installation du pont bascule dans la fosse 10, la structure 2 équipée des capteurs 4 et des platines d'appui 6 est mise en place dans la fosse 10. Les chevêtres 8 sont disposés de telle sorte que chaque platine d'appui 6 vient se poser sur une traverse principale 20. Chaque platine 6 est alors vissée sur la traverse principale 20 correspondante (figure 5).

Les éléments profilés 24 et les plaques de butée 26 permettent de limiter le mouvement de la structure 2 par rapport à la fosse 10. En effet, la liaison entre la structure 2 et la fosse 10, ou les chevêtres 8, se fait par l'intermédiaire des capteurs 4. Ceux-ci n'établissent pas une liaison rigide mais permettent un mouvement relatif entre la fosse 10 et la structure 2. Pour limiter le déplacement de la structure 2 par rapport à la fosse 10 et ainsi limiter les contraintes exercées sur les capteurs 4, on prévoit de manière connue des butées de choc. Celles-ci sont destinées à venir coopérer avec des poutres de la charpente 12 de la structure du pont bascule.

Comme on peut le constater de la description qui précède, il n'y a pas de démontage des capteurs entre l'atelier de fabrication et la fosse dans laquelle est montée le pont bascule. Les normes concernant les ponts bascules permettent alors de ne réaliser qu'un seul contrôle du pont comme c'est le cas pour les ponts bascules transportables. Ce contrôle peut être réalisé en usine ce qui limite les frais. En effet il est alors inutile de déplacer des masses étalon vers la fosse destinée à recevoir le pont bascule.

Lors de la mise en place du pont bascule dans la fosse, il n'y a pas de scellement à faire. Celui-ci a été réalisé préalablement. Ceci permet une installation rapide du pont bascule. Il devient alors possible d'installer un tel pont bascule en une demi-journée.

Le procédé et le chevêtre décrits ci-dessus, par rapport à l'état de la technique antérieure, permettent également d'obtenir des butées de choc plus solidement ancrées, et donc plus résistantes. Il n'y a pas de risque de descellement pour un pont bascule installé tel que décrit ci-dessus au niveau des butées de choc.

Comme il va de soi, l'invention ne se limite pas au procédé décrit ci-dessus à titre d'exemple non limitatif ni au chevêtre tel que décrit ; elle en embrasse au contraire toutes les variantes dans le cadre des revendications ci-après.

Ainsi, par exemple, on pourrait par exemple avoir un chevêtre par capteur. La structure du chevêtre serait alors différente de celle décrite ci-dessus. De même, dans le cas d'un chevêtre destiné à recevoir deux platines d'appui de capteur, on pourrait avoir une structure tout à fait différente de celle décrite.

La fixation des platines d'appui sur les surfaces d'appui correspondant peut se faire autrement que par vissage. On pourrait par exemple réaliser un rivetage.

Pendant le transport, il est préférable de rendre la platine d'appui du capteur solidaire de la structure. A cette fin, on peut envisager d'autres moyens que le vissage de la platine par rapport au caisson portant le capteur décrit ci-dessus.

## Revendications

1. Procédé d'installation sur un ouvrage, par exemple en béton, tel une fosse (10), une dalle ou similaire, d'un pont bascule comportant une structure (2) destinée à être montée sur l'ouvrage (10), des capteurs (4) munis d'une platine d'appui (6) étant disposés entre la structure (2) et l'ouvrage (10),
**caractérisé en ce qu'**il comporte les étapes suivantes :
a) scellement dans l'ouvrage de dispositifs d'appui (8) comprenant chacun deux surfaces d'appui (20) destinées à recevoir chacune une platine d'appui (6) d'un capteur,
b) montage des capteurs (4) et des platines d'appui (6) sur la structure (2), et
c) fixation de chaque platine d'appui (6) sur la surface d'appui (20) correspondante.

2. Procédé selon la revendication 1, **caractérisé en ce qu'**il comporte l'étape suivante réalisée avant l'étape c) :
- bridage des platines d'appui (6) sur la structure (2) du pont bascule.

3. Procédé selon l'une des revendications 1 ou 2, **caractérisé en ce que** la fixation des platines d'appui (6) sur les surfaces d'appui se fait par vissage.

4. Ouvrage, par exemple en béton, tel une fosse (10), une dalle ou similaire, destiné à recevoir un pont bascule, **caractérisé en ce qu'**il comporte au moins un dispositif d'appui (8) scellé dans l'ouvrage et destiné à recevoir au d'appui (8) comportant deux longerons (18) reliés par au moins deux traverses (20) sur chacune desquelles est ménagée une surface d'appui.

5. Ouvrage selon la revendication 4, **caractérisé en ce que** chaque dispositif d'appui comporte en outre au moins une traverse secondaire (22) sur laquelle est fixée, de préférence par soudage, une butée de choc (24,26) s'étendant perpendiculairement aux longerons (18) et aux traverses (20,22).

6. Ouvrage selon l'une des revendications 4 ou 5, **caractérisé en ce que** les longerons (18) sont des profilés métalliques présentant une section transversale en U.

7. Procédé selon l'une des revendications 1 à 3, **caractérisé en ce qu'**il met en oeuvre un ouvrage selon l'une des revendications 4 à 6.

8. Procédé selon la revendication 7, **caractérisé en ce que** les longerons (18) sont montés transversalement par rapport à la structure (2) du pont bascule.

## Claims

1. Method of installing, on a civil-engineering construction made, for example, of concrete, such as a pit (10), a slab or the like, a weigh-bridge having a structure (2) which is intended for mounting on said construction (10), sensors (4) equipped with a supporting deck (6) being disposed between said structure (2) and said construction (10),
**characterised in that** said method consists of the following stages:
a) the embedding, in the civil-engineering construction, of supporting devices (8) each comprising two supporting surfaces (20) which are each intended to receive a supporting deck (6) belonging to a sensor;
b) the fitting of the sensors (4) and supporting decks (6) onto the structure (2); and
c) the fixing of each supporting deck (6) onto the corresponding supporting surface (20).

2. Method according to claim 1, **characterised in that** it consists of the following stage, which is carried out before stage c) :
- the clamping of the supporting decks (6) onto the structure (2) of the weigh-bridge.

3. Method according to either of claims 1 or 2, **characterised in that** the fixing of the supporting decks (6) onto the supporting surfaces is effected by screwing.

4. Civil-engineering construction made, for example, of concrete, such as a pit (10), a slab or the like, which is intended to receive a weigh-bridge, **characterised in that** it has at least one supporting device (8) which is embedded in said construction and is intended to receive at least two decks (6) for supporting weigh-bridge sensors (4), said supporting device (8) having two longitudinal girders (18) connected by at least two cross-members (20), on each of which a supporting surface is arranged.

5. Civil-engineering construction according to claim 4, **characterised in that** each supporting device has, in addition, at least one secondary cross-member (22) onto which there is fixed, preferably by welding, an impact stop (24, 26) which extends perpendicularly to the longitudinal girders (18) and to the cross-members (20, 22).

6. Civil-engineering construction according to either of claims 4 or 5, **characterised in that** the longitudinal girders (18) are metal sections having a U-shaped cross-section.

7. Method according to one of claims 1 to 3, **characterised in that** it utilises a civil-engineering construction according to one of claims 4 to 6.

8. Method according to claim 7, **characterised in that** the longitudinal girders (18) are mounted transversely in relation to the structure (2) of the weigh-bridge.

## Patentansprüche

1. Verfahren zur Installation einer Brückenwaage auf einem Bauwerk, beispielsweise aus Beton, etwa einer Grube (10), einer Bodenplatte oder dergleichen, wobei die Brückenwaage eine Struktur (2) umfasst, die dazu bestimmt ist, auf dem Bauwerk (10) montiert zu werden, sowie Messfühler (4), die mit einer Auflageplatte (6) versehen sind, die zwischen der Struktur (2) und dem Bauwerk (10) angeordnet sind,
**dadurch gekennzeichnet, dass** es die folgenden Schritte umfasst:
a) Einbau von Auflagevorrichtungen (8) im Bauwerk, wobei jede zwei Auflageflächen (20) hat, die dazu dienen, jeweils eine Auflageplatte (6) eines Messfühlers aufzunehmen,
b) Montage der Messfühler (4) und der Auflageplatten (6) an der Struktur (2), und
c) Befestigung jeder Auflageplatte (6) an der entsprechenden Auflagefläche (20).

2. Verfahren nach Anspruch 1, **dadurch gekennzeichnet, dass** es den folgenden Schritt umfasst, der vor dem Schritt c) durchgeführt wird:
- Anflanschen der Auflageplatten (6) an der Struktur (2) der Brückenwaage.

3. Verfahren nach einem der Ansprüche 1 oder 2, **dadurch gekennzeichnet, dass** die Befestigung der Auflageplatten (6) an den Auflageflächen durch Verschrauben durchgeführt wird.

4. Bauwerk, zum Beispiel aus Beton, etwa eine Grube (10), eine Bodenplatte oder dergleichen, das dazu bestimmt ist, eine Brückenwaage aufzunehmen, **dadurch gekennzeichnet, dass** es mindestens eine im Bauwerk eingelassene Auflagevorrichtung (8) umfasst, die dazu dient, mindestens zwei Auflageplatten (6) für Brückenwaage-Messfühler (4) aufzunehmen, wobei die Auflagevorrichtung (8) zwei Längsträger (18) hat, die durch mindestens zwei Traversen (20) verbunden sind, auf denen jeweils eine Auflagefläche vorhanden ist.

5. Bauwerk nach Anspruch 4, **dadurch gekennzeichnet, dass** jede Auflagevorrichtung darüber hinaus mindestens eine sekundäre Traverse (22) hat, auf der, bevorzugt durch Schweißen, ein Aufprall-Anschlag (24, 26) befestigt ist, der sich senkrecht zu den Längsträgern (18) und den Traversen (20, 22) erstreckt.

6. Bauwerk nach einem der Ansprüche 4 oder 5, **dadurch gekennzeichnet, dass** die Längsträger (18) Metallprofile sind, die einen U-förmigen Querschnitt aufweisen.

7. Verfahren nach einem der Ansprüche 1 bis 3, **dadurch gekennzeichnet, dass** es mit einem Bauwerk nach einem der Ansprüche 4 bis 6 betrieben wird.

8. Verfahren nach Anspruch 7, **dadurch gekennzeichnet, dass** die Längsträger (18), bezogen auf die Struktur (2) der Brückenwaage, quer montiert sind.
